# EUROPEAN PATENT APPLICATION

(11) **EP 4 559 974 A1**
(43) Date of publication of application: **28.05.2025**
(21) Application number: 23842884.1
(22) Date of filing: 12.07.2023
(51) Int. Cl.: C08L 67/04, C08K 5/103

(54) **IMPACT CUSHIONING PARTICLES, ARTIFICIAL LAWN STRUCTURE, AND PAVEMENT**

(30) Priority: 19.07.2022 JP 2022114938
(71) Applicant: Kaneka Corporation, Osaka-shi, Osaka 530-8288 (JP)
(72) Inventor: OKURA, Tetsuo, Osaka 559-8510 (JP); TANAKA, Shigeru, Osaka 559-8510 (JP); OHTA, Koki, Osaka 559-8510 (JP); DOHI, Koichi, Osaka 559-8510 (JP)
(74) Representative: Vossius & Partner Patentanwälte Rechtsanwälte mbB
(86) International application number: PCT/JP2023/025667
(87) International publication number: WO 2024/018959

(57) **Abstract**

Impact-cushioning particles contain a poly(3-hydroxybutyrate) resin component. The poly(3-hydroxybutyrate) resin component contains a copolymer component (A), and the copolymer component (A) includes a copolymer (A-1) and/or a copolymer (A-2) listed below. The impact-cushioning particles are suitable for use, in particular, in artificial turf or a paved structure.

Copolymer (A-1): Copolymer of 3-hydroxybutyrate units and other hydroxyalkanoate units, in which the content of the other hydroxyalkanoate units is from 1 to less than 10 mol%.

Copolymer (A-2): Copolymer of 3-hydroxybutyrate units and other hydroxyalkanoate units, in which the content of the other hydroxyalkanoate units is 24 mol% or more.

## Description

### Technical Field

The present invention relates to impact-cushioning particles to be dispersed on floors etc. in order to cushion impacts such as those which occur at landing on the floors etc. during walking or sports activities and further relates to an artificial turf structure or a paved structure incorporating the impact-cushioning particles.

### Background Art

Impact-reducing particles made of rubber, elastomer, resin or the like are used, for example, in sports facilities. The particles are combined with artificial turf and dispersed on floors etc. in order to cushion impacts exerted on people at landing on the floors etc.

If such particles attach to the outsoles of shoes or fly out of facilities for some reason such as being kicked off, the particles are released to the environment and could be finally carried to the sea through rivers or the like. The particles carried to the sea act as microplastics which cause marine pollution.

One approach to addressing environmental pollution such as the marine pollution mentioned above is to use, for example, palm shells (see Patent Literature 1), corks, or wooden chips. However, with the use of any of these materials in a facility, the facility could become and remain wet due to, for example, water absorption by the materials, and the water absorption could cause a reduction in impact-cushioning performance.

### Citation List

### Patent Literature

PTL 1: Japanese Patent No. 6849454

### Summary of Invention

### Technical Problem

Another possible approach to addressing environmental pollution caused by impact-cushioning particles may be to use a biodegradable resin such as polylactic acid. However, polylactic acid is rigid and lacks sufficient impact-absorbing performance. Furthermore, polylactic acid is poorly biodegradable in the environment, especially in the sea. Thus, the use of polylactic acid cannot be a solution to the problem of environmental pollution.

In view of the above circumstances, the present invention aims to provide impact-cushioning particles superior in marine biodegradability and impact-absorbing performance.

### Solution to Problem

As a result of intensive studies with the goal of solving the above problem, the present inventors have found that particles containing a poly(3-hydroxybutyrate) resin component having a given composition have high marine biodegradability and that such particles have impact-absorbing performance required of materials used in a paved road, artificial turf, or the like to impart impact-cushioning performance. Based on this finding, the inventors have completed the present invention.

Specifically, the present invention relates to impact-cushioning particles containing a poly(3-hydroxybutyrate) resin component, wherein
the poly(3-hydroxybutyrate) resin component contains a copolymer component (A),
the copolymer component (A) includes a copolymer (A-1) and/or a copolymer (A-2),
the copolymer (A-1) is a copolymer of 3-hydroxybutyrate units and other hydroxyalkanoate units, wherein a content of the other hydroxyalkanoate units is from 1 to less than 10 mol%, and
the copolymer (A-2) is a copolymer of 3-hydroxybutyrate units and other hydroxyalkanoate units, wherein a content of the other hydroxyalkanoate units is 24 mol% or more.

### Advantageous Effects of Invention

The present invention can provide impact-cushioning particles superior in marine biodegradability and impact-absorbing performance. In particular, the impact-cushioning particles are suitable for use in artificial turf or a paved structure.

### Description of Embodiments

Hereinafter, embodiments of the present invention will be described. The present invention is not limited to the embodiments described below.

One embodiment of the present invention relates to impact-cushioning particles containing a poly(3-hydroxybutyrate) resin component.

### (Poly(3-Hydroxybutyrate) Resin Component)

The poly(3-hydroxybutyrate) resin component may consist of a single poly(3-hydroxybutyrate) resin or may be a mixture of two or more poly(3-hydroxybutyrate) resins. Preferably, the poly(3-hydroxybutyrate) resin component is a mixture of at least two poly(3-hydroxybutyrate) resins differing in the types and/or contents of the constituent monomers because such a mixture is superior in impact-absorbing performance and easily processable into particles.

The poly(3-hydroxybutyrate) resin is a polymer having 3-hydroxybutyrate units, in particular a polymer containing units represented by the following formula (1).

[-CH(CH₃)-CH₂-CO-O-] (1)

The poly(3-hydroxybutyrate) resin is particularly preferably a microbially produced poly(3-hydroxybutyrate) resin. In the microbially produced poly(3-hydroxybutyrate) resin, all of the 3-hydroxybutyrate units are contained as (R)-3-hydroxybutyrate units.

The poly(3-hydroxybutyrate) resin preferably contains 50 mol% or more, more preferably 60 mol% or more, even more preferably 70 mol% or more, of 3-hydroxybutyrate units (in particular, the units represented by the formula (1)) in total structural units. The poly(3-hydroxybutyrate) resin may contain only one type or two or more types of 3-hydroxybutyrate units as polymer structural units or may contain other units (such as 4-hydroxyalkanoate units) in addition to the one type or two or more types of 3-hydroxybutyrate units.

The poly(3-hydroxybutyrate) resin is a homopolymer or copolymer containing 3-hydroxybutyrate (hereinafter also referred to as "3HB") units. In particular, all of the 3-hydroxybutyrate units are preferably (R)-3-hydroxybutyrate units. The poly(3-hydroxybutyrate) resin is preferably a copolymer of 3-hydroxybutyrate units and other hydroxyalkanoate units.

Specific examples of the poly(3-hydroxybutyrate) resin include poly(3-hydroxybutyrate), poly(3-hydroxybutyrate-co-3-hydroxypropionate), poly(3-hydroxybutyrate-co-3-hydroxyvalerate) abbreviated as "P3HB3HV", poly(3-hydroxybutyrate-co-3-hydroxyvalerate-3-hydroxyhexanoate), poly(3-hydroxybutyrate-co-3-hydroxyhexanoate) abbreviated as "P3HB3HH", poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as "P3HB4HB". In particular, poly(3-hydroxybutyrate-co-3-hydroxyhexanoate) or poly(3-hydroxybutyrate-co-4-hydroxybutyrate) is preferred in terms of factors such as the productivity in particle production and the mechanical properties of the resulting particles.

In the case where the poly(3-hydroxybutyrate) resin component contains a copolymer of 3-hydroxybutyrate units and other hydroxyalkanoate units, the average content ratio between 3-hydroxybutyrate units and other hydroxyalkanoate units (3HB units/other hydroxyalkanoate units) in total monomer units constituting the poly(3-hydroxybutyrate) resin component is preferably from 93/7 to 80/30 (mol%/mol%), more preferably from 92/8 to 72/28 (mol%/mol%), even more preferably from 90/10 to 75/25 (mol%/mol%), still even more preferably from 88/12 to 76/24 (mol%/mol%), particularly preferably from 86/14 to 78/22 (mol%/mol%), and most preferably from 84/16 to 80/20 (mol%/mol%) in terms of ensuring both high productivity in particle production and good mechanical properties of the resulting particles.

In the case where the poly(3-hydroxybutyrate) resin component contains poly(3-hydroxybutyrate-co-3-hydroxyhexanoate) which is a copolymer of 3-hydroxybutyrate units and 3-hydroxyhexanoate (3HH) units, the average content ratio between 3-hydroxybutyrate units and other hydroxyalkanoate units (3HB units/3HH units) in total monomer units constituting the poly(3-hydroxybutyrate) resin component is more preferably from 90/10 to 75/25 (mol%/mol%), still even more preferably from 88/12 to 76/24 (mol%/mol%), particularly preferably from 86/14 to 78/22 (mol%/mol%), and most preferably from 84/16 to 80/20 (mol%/mol%).

The average content ratio between different monomer units in total monomer units constituting the poly(3-hydroxybutyrate) resin component can be determined by a method known to those skilled in the art, such as a method described in paragraph [0047] of WO 2013/147139. The "average content ratio" refers to the molar ratio between different monomer units in total monomer units constituting the poly(3-hydroxybutyrate) resin component. In the case where the poly(3-hydroxybutyrate) resin component is a mixture of two or more poly(3-hydroxybutyrate) resins, the "average content ratio" refers to the molar ratio between different monomer units contained in the total mixture.

The weight-average molecular weight of the poly(3-hydroxybutyrate) resin component is not limited to a particular range. In terms of ensuring both high productivity in particle production and good mechanical properties of the resulting particles, the weight-average molecular weight is preferably from 20 × 10⁴ to 200 × 10⁴, more preferably from 25 × 10⁴ to 150 × 10⁴, and even more preferably from 30 × 10⁴ to 100 × 10⁴.

In the case where the poly(3-hydroxybutyrate) resin component is a mixture of two or more poly(3-hydroxybutyrate) resins, the weight-average molecular weight of each poly(3-hydroxybutyrate) resin is not limited to a particular range. However, for example, when high-crystallinity and low-crystallinity poly(3-hydroxybutyrate) resins as described later are used in combination, the weight-average molecular weight of the high-crystallinity poly(3-hydroxybutyrate) resin is preferably from 20 × 10⁴ to 100 × 10⁴, more preferably from 22 × 10⁴ to 80 × 10⁴, and even more preferably from 25 × 10⁴ to 60 × 10⁴ in terms of ensuring both high productivity in particle production and good mechanical properties of the resulting particles. In terms of ensuring both high productivity in particle production and good mechanical properties of the resulting particles, the weight-average molecular weight of the low-crystallinity poly(3-hydroxybutyrate) resin is preferably from 20 × 10⁴ to 250 × 10⁴, more preferably from 25 × 10⁴ to 230 × 10⁴, and even more preferably from 30 × 10⁴ to 200 × 10⁴.

The weight-average molecular weight of the poly(3-hydroxybutyrate) resin or poly(3-hydroxybutyrate) resin component can be measured as a polystyrene-equivalent molecular weight by gel permeation chromatography (HPLC GPC system manufactured by Shimadzu Corporation) using a chloroform solution of the resin or resin component. The column used in the gel permeation chromatography may be any column suitable for weight-average molecular weight measurement.

In the case where at least two poly(3-hydroxybutyrate) resins differing in the types and/or contents of the constituent monomers are used in combination, the poly(3-hydroxybutyrate) resins preferably include at least one high-crystallinity poly(3-hydroxybutyrate) resin and at least one low-crystallinity poly(3-hydroxybutyrate) resin. In general, high-crystallinity poly(3-hydroxybutyrate) resins are superior in terms of productivity but have low mechanical strength, while low-crystallinity poly(3-hydroxybutyrate) resins have good mechanical properties although being inferior in terms of productivity. When a high-crystallinity poly(3-hydroxybutyrate) resin and a low-crystallinity poly(3-hydroxybutyrate) resin are mixed, it is inferred that the high-crystallinity poly(3-hydroxybutyrate) resin forms fine resin crystals and the low-crystallinity poly(3-hydroxybutyrate) resin forms tie molecules that link the resin crystals to one another. The combined use of these resins can improve the properties such as the impact-absorbing performance, wear resistance, and heat resistance of the resulting particles.

The content of 3-hydroxybutyrate units in the high-crystallinity poly(3-hydroxybutyrate) resin is preferably higher than the average content of 3-hydroxybutyrate units in total monomer units constituting the poly(3-hydroxybutyrate) resin component. The content of 3-hydroxybutyrate units in the low-crystallinity poly(3-hydroxybutyrate) resin is preferably lower than the average content of 3-hydroxybutyrate units in total monomer units constituting the poly(3-hydroxybutyrate) resin component.

Specifically, the poly(3-hydroxybutyrate) resin component contained in the impact-cushioning particles according to the present embodiment contains a copolymer component (A), and the copolymer component (A) includes a copolymer (A-1) and/or a copolymer (A-2) listed below.

Copolymer (A-1): Copolymer of 3-hydroxybutyrate units and other hydroxyalkanoate units, in which the content of the other hydroxyalkanoate units is from 1 to less than 10 mol%.

Copolymer (A-2): Copolymer of 3-hydroxybutyrate units and other hydroxyalkanoate units, in which the content of the other hydroxyalkanoate units is 24 mol% or more.

The content of the other hydroxyalkanoate units in the copolymer (A-1) is preferably from 1 to 9 mol%, more preferably from 1 to 8 mol%, and even more preferably from 1 to 6 mol%.

The copolymer (A-1) is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

The content of the other hydroxyalkanoate units in the copolymer (A-2) is preferably from 24 to 99 mol%, more preferably from 24 to 50 mol%, even more preferably from 24 to 35 mol%, and particularly preferably from 24 to 30 mol%.

The copolymer (A-2) is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

In terms of the processability into particles and the strength of the resulting particles, the content of the copolymer (A-1) and/or the copolymer (A-2) in the poly(3-hydroxybutyrate) resin component is preferably 50 wt% or more based on the total weight of the poly(3-hydroxybutyrate) resin component. The content of the copolymer (A-1) and/or the copolymer (A-2) is more preferably 60 wt% or more and even more preferably 70 wt% or more. The content of the copolymer (A-1) and/or the copolymer (A-2) may be up to 100 wt%. The poly(3-hydroxybutyrate) resin component may contain a poly(3-hydroxybutyrate) resin that does not fall within the definition of the copolymer (A-1) or (A-2).

The proportion of each of the copolymers (A-1) and (A-2) to the total amount of the copolymers (A-1) and (A-2) is not limited to a particular range. In terms of the processability into particles and the strength of the resulting particles, it is preferable that the proportion of the copolymer (A-1) be from 50 to 95 wt% and the proportion of the copolymer (A-2) be from 5 to 50 wt%. More preferably, the proportion of the copolymer (A-1) is from 60 to 90 wt% and the proportion of the copolymer (A-2) is from 10 to 40 wt%. Even more preferably, the proportion of the copolymer (A-1) is from 70 to 85 wt% and the proportion of the copolymer (A-2) is from 15 to 30 wt%.

In terms of the processability into particles and the strength of the resulting particles, the melting point of the poly(3-hydroxybutyrate) resin component is preferably from 120 to 170°C and more preferably from 130 to 160°C.

The production of the poly(3-hydroxybutyrate) resin is not limited to using a particular method and may be accomplished by a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganism, a genetically modified microorganism incorporating any suitable poly(3-hydroxybutyrate) resin synthesis-related gene may be used depending on the poly(3-hydroxybutyrate) resin to be produced. The culture conditions including the type of the substrate may be optimized depending on the poly(3-hydroxybutyrate) resin to be produced.

The obtainment of a blend of two or more poly(3-hydroxybutyrate) resins is not limited to using a particular method. A blend of two or more poly(3-hydroxybutyrate) resins may be obtained by microbial production or chemical synthesis. Alternatively, a blend of two or more resins may be obtained by melting and kneading the resins using a device such as an extruder, a kneader, a Banbury mixer, or a roll mill or may be obtained by dissolving and mixing the resins in a solvent and drying the resulting mixture.

### (Additional Resin)

The impact-cushioning particles according to the present embodiment may contain an additional resin other than poly(3-hydroxybutyrate) resins to the extent that the effect of the invention is not diminished. Examples of such an additional resin include: aliphatic polyester resins such as polybutylene succinate adipate, polybutylene succinate, polycaprolactone, and polylactic acid; and aliphatic-aromatic polyester resins such as polybutylene adipate terephthalate, polybutylene sebacate terephthalate, and polybutylene azelate terephthalate. The impact-cushioning particles may contain only one additional resin or may contain two or more additional resins.

The amount of the additional resin is not limited to a particular range, but is preferably 30 parts by weight or less, more preferably 20 parts by weight or less, even more preferably 10 parts by weight or less, and particularly preferably 5 parts by weight or less per 100 parts by weight of the total amount of the poly(3-hydroxybutyrate) resin component. The amount of the additional resin may be 1 part by weight or less. The lower limit of the amount of the additional resin is not limited to a particular value and may be 0 part by weight.

### (Plasticizer)

The impact-cushioning particles according to the present embodiment preferably contain a plasticizer in addition to the poly(3-hydroxybutyrate) resin component. The addition of the plasticizer further enhances the impact-absorbing performance of the particles containing the poly(3-hydroxybutyrate) resin component.

The plasticizer is not limited to a particular type. In terms of the compatibility with the poly(3-hydroxybutyrate) resin component, the use of an ester compound having an ester bond in the molecule is preferred.

Examples of ester compounds that can be used as the plasticizer include modified glycerin ester compounds, dibasic ester compounds, adipic ester compounds, polyether ester compounds, benzoic ester compounds, citric ester compounds, isosorbide ester compounds, and polycaprolactone compounds. Among these compounds, the modified glycerin ester compounds, the dibasic ester compounds, the adipic ester compounds, the polyether ester compounds, or the isosorbide ester compounds are preferred. One of the ester compounds as mentioned above may be used alone, or two or more thereof may be used in combination. When two or more ester compounds are used in combination, the mix proportions of the ester compounds may be adjusted as appropriate.

Specific examples of the modified glycerin ester compounds that can be used include monoesters, diesters, and triesters of glycerin. In terms of the compatibility with the poly(3-hydroxybutyrate) resin component, the triesters of glycerin are preferred. Among the triesters of glycerin, glycerin diacetomonoesters are particularly preferred. Specific examples of the glycerin diacetomonoesters include glycerin diacetomonolaurate, glycerin diacetomonooleate, glycerin diacetomonostearate, glycerin diacetomonocaprylate, and glycerin diacetomonodecanoate. Examples of such modified glycerin compounds include "RIKEMAL" PL series and "BIOCIZER" of Riken Vitamin Co., Ltd.

Specific examples of the dibasic ester compounds include dibutyl adipate, diisobutyl adipate, bis(2-ethylhexyl) adipate, diisononyl adipate, diisodecyl adipate, bis[2-(2-butoxyethoxy)ethyl] adipate, bis[2-(2-butoxyethoxy)ethyl] adipate, bis(2-ethylhexyl) azelate, dibutyl sebacate, bis(2-ethylhexyl) sebacate, diethyl succinate, and mixed dibasic ester compounds.

Examples of the adipic ester compounds include diethylhexyl adipate, dioctyl adipate, and diisononyl adipate.

Examples of the polyether ester compounds include polyethylene glycol dibenzoate, polyethylene glycol dicaprylate, and polyethylene glycol diisostearate.

Among the ester compounds as mentioned above, the modified glycerin ester compounds are preferred in terms of cost, high utility, and high biomass level. The glycerin triesters are more preferred, the glycerin diacetomonoesters are even more preferred, and glycerin diacetomonolaurate is particularly preferred.

The amount of the plasticizer can be set as appropriate in view of factors such as the productivity in particle production and the mechanical properties of the resulting particles. The amount of the plasticizer is preferably from 10 to 70 parts by weight, more preferably from 20 to 60 parts by weight, and even more preferably from 30 to 50 parts by weight per 100 parts by weight of the total amount of the poly(3-hydroxybutyrate) resin component. When the amount of the plasticizer is in the above range, the impact-cushioning particles can be produced at suitable productivity and have suitable mechanical properties.

### (Additive)

The impact-cushioning particles according to the present embodiment may contain an additive to the extent that the effect of the invention is not diminished. Examples of the additive include a nucleating agent, a lubricant, a plasticizer, an antistatic agent, a flame retardant, a conductive additive, a heat insulating agent, a crosslinking agent, an antioxidant, an ultraviolet absorber, a colorant, an inorganic filler, an organic filler, and a hydrolysis inhibitor, any of which may be used depending on the intended purpose. In particular, biodegradable additives are preferred.

Examples of the nucleating agent include poly(3-hydroxybutyrate) which is a homopolymer of 3-hydroxybutyrate, pentaerythritol, orotic acid, aspartame, cyanuric acid, glycine, zinc phenylphosphonate, and boron nitride. Among these compounds, poly(3-hydroxybutyrate) and pentaerythritol are preferred because they are particularly superior in the accelerating effect on crystallization of the poly(3-hydroxybutyrate) resin component. Poly(3-hydroxybutyrate) can be used also as the poly(3-hydroxybutyrate) resin component described above.

The amount of the nucleating agent is not limited to a particular range but is preferably from 0.1 to 5 parts by weight, more preferably from 0.5 to 3 parts by weight, and even more preferably from 0.7 to 1.5 parts by weight per 100 parts by weight of the total amount of the poly(3-hydroxybutyrate) resin component. One nucleating agent may be used or two or more nucleating agents may be used. The proportions of the nucleating agents used can be adjusted as appropriate depending on the intended purpose.

Examples of the lubricant include behenamide, oleamide, erucamide, stearamide, palmitamide, N-stearyl behenamide, N-stearyl erucamide, ethylene bis(stearamide), ethylene bis(oleamide), ethylene bis(erucamide), ethylene bis(lauramide), ethylene bis(capramide), p-phenylene bis(stearamide), and a polycondensation product of ethylenediamine, stearic acid, and sebacic acid. Among these compounds, behenamide and erucamide are preferred because they are superior in the lubricating effect on the poly(3-hydroxybutyrate) resin component.

The amount of the lubricant is not limited to a particular range but is preferably from 0.01 to 5 parts by weight, more preferably from 0.05 to 3 parts by weight, and even more preferably from 0.1 to 1.5 parts by weight per 100 parts by weight of the total amount of the poly(3-hydroxybutyrate) resin component. One lubricant may be used or two or more lubricants may be used. The proportions of the lubricants used can be adjusted as appropriate depending on the intended purpose.

### (Particles)

The impact-cushioning particles according to the present embodiment are not limited to a particular shape and may have any shape to the extent that the effect of the invention is not diminished. For example, it is preferable that the impact-cushioning particles be generally spherical or cylindrical (generally the shape of a disc) or be generally polygonal (generally the shape of a polygonal plate). The particle size of the impact-cushioning particles may be adjusted as appropriate. For example, in the case where the impact-cushioning particles are used to fill artificial turf with them, a number-average particle size is preferably from 0.5 to 7 mm, more preferably from 1 to 5 mm, even more preferably from 2 to 4 mm, and still even more preferably from 2 to 3 mm. The number-average particle size is determined as follows: the largest of the vertical length, the horizontal length, and the width of each particle is determined as the particle size of the particle, and the average of the determined particle sizes is calculated as the number-average particle size. When the particle size is in the above range, the particles can be prevented from flowing out, flying off, or floating on water for some reason such as wind or rain.

The specific gravity of the impact-cushioning particles according to the present embodiment is not limited to a particular range and may be in any range to the extent that the effect of the invention is not diminished. For example, in the case where the impact-cushioning particles are used to fill artificial turf with them, the specific gravity is preferably 1 or more to prevent the particles from flowing out, flying off, or floating on water for some reason such as wind or rain.

The hardness of the impact-cushioning particles according to the present embodiment is not limited to a particular range and may be in any range to the extent that the effect of the invention is not diminished. For example, in the case where the impact-cushioning particles are used as a filler for artificial turf or a paved structure, the hardness of the impact-cushioning particles, as measured according to the type A method of JIS K 7215, is preferably from 60 to 95 and more preferably from 70 to 90 because, for example, the impact-cushioning particles having such a hardness resist being deformed and compacted due to repeated exposure to tread pressure, cause less wearing of the outsoles of shoes, and contribute less to slipperiness in rainy weather.

### (Method for Producing Particles)

The impact-cushioning particles according to the present embodiment can be produced by a known method. For example, the particles can be obtained as follows: the poly(3-hydroxybutyrate) resin component and other components are melted and kneaded in an extruder (single-screw extruder or twin-screw extruder), then the resulting mixture is extruded as a strand from a die coupled to the outlet of the extruder, and the resin material shaped as a strand is cut into pellets in the form of cylindrical, elliptic cylindrical, spherical, cubic, or rectangular parallelepiped-shaped particles.

The melting and kneading are not limited to particular conditions and may be carried out under any conditions set as appropriate. In terms of the thermal properties of the poly(3-hydroxybutyrate) resin component, the melting and kneading are preferably performed under conditions where the resin temperature as measured by a thermometer on the die is from 155 to 175°C. Additionally, in the melting and kneading, the residence time in the extruder is preferably from 60 to 300 seconds.

### (Uses of Particles)

The impact-cushioning particles according to the present embodiment are particles used to impart impact-cushioning performance. In particular, the impact-cushioning particles are suitable for being dispersed on a ground surface to cushion impacts during walking or sports activities. The dispersed impact-cushioning particles may be fixed or unfixed to the ground surface. Examples of the ground surface include artificial turf and a paved structure.

### (Artificial Turf Structure)

An artificial turf structure according to one aspect of the present embodiment includes artificial turf and the impact-cushioning particles according to the present embodiment, and the gaps between piles (turf yarns) of the artificial turf are filled with the impact-cushioning particles. The artificial turf can be a common type of artificial turf and is produced by planting piles made of resin into a base fabric. The gaps between the piles are filled with the impact-cushioning particles according to the present embodiment.

The amount of the filling particles can be set as appropriate depending on the resiliency and impact-absorbing performance required of the artificial turf structure. The amount of the particles is preferably such that the particles form a packed layer and is more preferably such that the packed layer has a thickness approximately equal to a half of the height of the piles. In terms of preventing flowing out or flying off of the particles, the thickness of the packed layer is preferably such that the protruding height h of the piles (the distance from the surface of the packed layer to the tips of the piles) is from 10 to 30 mm or more.

The impact-absorbing performance of the artificial turf structure according to the present aspect is preferably such that the damping factor as measured by impact absorption testing according to DIN 18032 is 40% or more and more preferably 50% or more. The upper limit of the damping factor is not limited to a particular value. In terms of foot feeling (the ease with which people can move their feet away from the artificial turf structure), the damping factor is preferably less than 90%.

### (Paved Structure)

A paved structure according to another aspect of the present embodiment includes, for example, a paved structure of a facility such as an athletics track field or a golf course and the impact-cushioning particles according to the present embodiment, and a part of the paved structure is filled with the impact-cushioning particles. A resilient paved structure of an athletics track field typically includes, in order from top to bottom, an embossed top layer, a topcoat layer, a resilient base layer, an asphalt concrete layer, and a crushed stone layer. The embossed top layer and the resilient base layer can be filled with the impact-cushioning particles according to the present embodiment.

The amount of the filling particles can be set as appropriate and is preferably such that the particles form a packed layer. The paved structure as described above can be produced by filling a part of a paved structure with the particles using a known method.

The impact-absorbing performance of the paved structure according to the present embodiment is preferably such that the damping factor as measured by impact absorption testing according to DIN 18032 is 50% or more. The upper limit of the damping factor is not limited to a particular value. In terms of foot feeling (the ease with which people can move their feet away from the paved structure), the damping factor is preferably less than 90%.

In the following items, preferred aspects of the present disclosure are listed. The present invention is not limited to the following items.

### [Item 1]

Impact-cushioning particles containing a poly(3-hydroxybutyrate) resin component, wherein
the poly(3-hydroxybutyrate) resin component contains a copolymer component (A),
the copolymer component (A) includes a copolymer (A-1) and/or a copolymer (A-2),
the copolymer (A-1) is a copolymer of 3-hydroxybutyrate units and other hydroxyalkanoate units, wherein a content of the other hydroxyalkanoate units is from 1 to less than 10 mol%, and
the copolymer (A-2) is a copolymer of 3-hydroxybutyrate units and other hydroxyalkanoate units, wherein a content of the other hydroxyalkanoate units is 24 mol% or more.

### [Item 2]

The impact-cushioning particles according to item 1, wherein
a content of the copolymer (A-1) and/or the copolymer (A-2) is 50 wt% or more based on a total weight of the poly(3-hydroxybutyrate) resin component.

### [Item 3]

The impact-cushioning particles according to item 1 or 2, wherein
an average content of hydroxyalkanoate units other than 3-hydroxybutyrate units in the poly(3-hydroxybutyrate) resin component is from 10 to 25 mol%.

### [Item 4]

The impact-cushioning particles according to any one of items 1 to 3, wherein
the poly(3-hydroxybutyrate) resin component has a melting point of 120 to 170°C.

### [Item 5]

The impact-cushioning particles according to any one of items 1 to 4, wherein
the other hydroxyalkanoate units are 3-hydroxyhexanoate units.

### [Item 6]

The impact-cushioning particles according to any one of items 1 to 5, containing 10 to 70 parts by weight of a plasticizer per 100 parts by weight of the total poly(3-hydroxybutyrate) resin component.

### [Item 7]

The impact-cushioning particles according to item 6, wherein
the plasticizer is a modified glycerin ester compound.

### [Item 8]

The impact-cushioning particles according to item 7, wherein
the modified glycerin ester compound includes at least one compound selected from the group consisting of glycerin diacetomonolaurate, glycerin diacetomonooleate, glycerin monoacetomonostearate, glycerin diacetomonocaprylate, and glycerin diacetomonodecanoate.

### [Item 9]

The impact-cushioning particles according to item 8, wherein
the modified glycerin ester compound includes glycerin diacetomonolaurate.

### [Item 10]

The impact-cushioning particles according to any one of items 1 to 9, for use in artificial turf or a paved structure.

### [Item 11]

An artificial turf structure including artificial turf and the impact-cushioning particles according to any one of items 1 to 9, wherein
gaps between piles of the artificial turf are filled with the impact-cushioning particles.

### [Item 12]

A paved structure including the impact-cushioning particles according to any one of items 1 to 9, wherein
at least a part of the paved structure is filled with the impact-cushioning particles.

### Examples

Hereinafter, the present invention will be specifically described using examples. The technical scope of the present invention is not limited by the examples given below.

Listed below are materials used in Examples and Comparative Examples.

### [Poly(3-Hydroxybutyrate) Resins]

P3HB3HH-1: P3HB3HH (average content ratio 3HB/3HH = 96/3 (mol%/mol%), weight-average molecular weight = 60 × 10⁴ g/mol), produced according to a method described in Example 2 of WO 2019/142845.

P3HB3HH-2: P3HB3HH (average content ratio 3HB/3HH = 72/28 (mol%/mol%), weight-average molecular weight = 60 × 10⁴ g/mol), produced according to a method described in Example 9 of WO 2019/142845.

P3HB3HH-3: P3HB3HH (average content ratio 3HB/3HH = 94/6 (mol%/mol%), weight-average molecular weight = 60 × 10⁴ g/mol), produced according to a method described in WO 2008/010296.

### [Plasticizer]

Glycerin diacetomonolaurate (BIOCIZER manufactured by Riken Vitamin Co., Ltd.)

### [Additive]

Lubricant: Behenamide (BNT-22H manufactured by Nippon Fine Chemical Co., Ltd.)

The following will describe evaluation methods used in Examples and Comparative Examples.

### [Method for Evaluating Hardness of Pellets]

Pellets prepared in each of Examples and Comparative Examples were placed between two polyimide films and then molded, together with the polyimide films, into a plate-shaped sample by means of a hot-press machine (temperature: 165°C, pressure: 5 MPa, time: 5 minutes). The sample was evaluated for durometer hardness according to JIS K 7215 (method A).

Additionally, the pellets were pressed with fingers, and the hardness (resiliency) of the pellets was qualitatively evaluated based on the feel to the fingers and rated according to the following criteria.

### <Rating Criteria>

Hard: The pellets resist deformation even when subjected to a strong force.

Good: The pellets are deformed but are so resilient that the tester feels a restorative force.

Soft: The pellets are deformed by a weak force and are so poorly resilient that the tester feels little restorative force.

### [Evaluation of Specific Gravity of Pellets]

The pellets prepared in Examples and Comparative Examples were measured for specific gravity by the underwater displacement method of JIS K 7112.

### [Impact-Absorbing Performance of Structure (Artificial Turf)]

Structures prepared in Examples and Comparative Examples were evaluated for impact-absorbing performance by impact absorption testing according to DIN 18032.

Additionally, the structures prepared in Examples and Comparative Examples were qualitatively evaluated by placing each structure on a concrete floor and repeating walking motion in bare feet on the same spot of the structure. The structures were rated according to the following criteria.

### <Rating Criteria>

Hard: The walking motion on the structure is similar to that on concrete. The tester feels an impact on the knee joint etc. upon landing on the structure.

Good: During the walking motion, the structure absorbs impacts, and the tester feels little impact upon landing on the structure. When moving each foot away from the structure, the tester feels a moderate rebound force which facilitates the walking motion.

Soft: The structure is deformed by a weak force, and the tester feels no impact upon landing on the structure. However, the structure is so poorly resilient that when moving each foot away from the structure, the tester feels a resistance which hinders the walking motion.

### [Biodegradability of Pellets in Seawater]

An amount of 1 g of the pellets prepared in each of Examples and Comparative Examples were immersed in 300 ml of seawater for 12 months, after which the pellets were washed and their weight was measured to determine the percentage decrease in weight. The seawater used contained 0.15 g of ammonium chloride and 0.03 g of potassium primary phosphate which were added according to ASTM D 7081-05.

### (Example 1)

A blend of 50 parts by weight of P3HB3HH-1 and 50 parts by weight of P3HB3HH-2 was further blended with 50 parts by weight of the plasticizer to obtain a resin mixture. The obtained resin mixture was placed into and extruded by a 26-mm-diameter corotating twin-screw extruder set to a cylinder temperature of 150°C and a die temperature of 145°C. The resin material extruded as a strand was solidified by passing it through a water bath filled with 40°C water, and the solidified strand was cut by a pelletizer to obtain pellets of the resin mixture.

The pellets were generally in the shape of an ellipse with a minor axis of 2 to 2.5 mm, a major axis of 2.8 to 3.0 mm, and a height of 1.0 to 1.5 mm.

The pellets thus prepared were measured for hardness and specific gravity. The results are listed in Table 1.

Artificial turf with a size of 1 m × 1 m (turf height: 65 mm, pile type: polyethylene, pile shape: 1-mm-wide straight, rhombic yarns, pile thickness: 14400 dtex, base fabric:
plain-woven fabric made of PP) was laid on concrete, and the gaps between the piles of the artificial turf were filled with the prepared pellets (3-mm-thick packed layer) to prepare an artificial turf structure sample.

Additionally, a primer (polyoxypropylene glycol/methylene bisphenyl isocyanate addition polymer having a Mw of 1000: terminal isocyanate group content = 16%) was applied to an asphalt surface to a weight per square meter of 300 g/m², and thus a primer layer was formed on the asphalt surface. Subsequently, a mixture of 100 parts by weight of the prepared pellets and 100 parts by weight of a binder (polyoxypropylene glycol/methylene bisphenyl isocyanate addition polymer having a Mw of 1000: terminal isocyanate group content = 9%) was applied to the primer layer to a thickness of 30 mm to form a resilient layer and thus prepare a paved structure sample.

The prepared artificial turf structure sample was evaluated for impact-absorbing performance. The results are listed in Table 1.

### (Examples 2 and 3)

Pellets, artificial turf structure samples, and paved structure samples were prepared in the same manner as in Example 1, except that the composition of the resin mixture was changed according to Table 1. The pellets were evaluated for hardness, specific gravity, and impact-absorbing performance. The results are listed in Table 1.

### (Comparative Example 1)

Pellets, an artificial turf structure sample, and a paved structure sample were prepared in the same manner as in Example 1, except that the resin mixture was replaced with polybutylene succinate having biodegradability (BioPBS^{™} FZ91PM manufactured by PTT MCC Biochem Co., Ltd.). The pellets were evaluated for hardness, specific gravity, and impact-absorbing performance. The results are listed in Table 1.

**[Table 1]**

| | | | Ex. 1 | Ex. 2 | Ex. 3 | Comp. 1 |
|---|---|---|---|---|---|---|
| Resin components (parts by weight) | P3HB resin component | P3HB3HH-1 (3HH content: 3 mol%) | 50 | 40 | 20 | |
| | | P3HB3HH-2 (3HH content: 28 mol%) | 50 | 60 | 30 | |
| | | P3HB3HH-3 (3HH content: 6 mol%) | | | 50 | |
| | Polybutylene succinate | | | | | 100 |
| Plasticizer (parts by weight) | Glycerin diacetomonolaurate | | 50 | | 10 | 50 |
| Additive (parts by weight) | Behenamide | | 0.5 | 0.5 | 0.5 | 0.5 |
| Properties of particles | Hardness | JIS K7215 (method A) | 82 | 87 | 89 | > 95 |
| | | Qualitative evaluation | Good | Good | Good | Hard |
| | Specific gravity | JIS K 7112 | 1.11 | 1.19 | 1.17 | 1.26 |
| | Impact-absorbing performance | DIN 18032 | 53 | 48 | 42 | 35 |
| | | Qualitative evaluation | Good | Good | Good | Hard |
| Weight decrease in seawater | | | 100% | 100% | 100% | 0% |

Table 1 reveals the following findings. Examples 1 to 3 demonstrate that impact-cushioning particles made with a poly(3-hydroxybutyrate) resin have good hardness and high impact-absorbing performance and are superior in biodegradability in seawater.

In contrast, Comparative Example 1 demonstrates that impact-cushioning particles made with polybutylene succinate are too hard and inferior in impact-absorbing performance and cannot exhibit biodegradability in seawater.

## Claims

1. Impact-cushioning particles comprising a poly(3-hydroxybutyrate) resin component, wherein
the poly(3-hydroxybutyrate) resin component comprises a copolymer component (A),
the copolymer component (A) comprises a copolymer (A-1) and/or a copolymer (A-2),
the copolymer (A-1) is a copolymer of 3-hydroxybutyrate units and other hydroxyalkanoate units, wherein a content of the other hydroxyalkanoate units is from 1 to less than 10 mol%, and
the copolymer (A-2) is a copolymer of 3-hydroxybutyrate units and other hydroxyalkanoate units, wherein a content of the other hydroxyalkanoate units is 24 mol% or more.

2. The impact-cushioning particles according to claim 1, wherein
a content of the copolymer (A-1) and/or the copolymer (A-2) is 50 wt% or more based on a total weight of the poly(3-hydroxybutyrate) resin component.

3. The impact-cushioning particles according to claim 1, wherein
an average content of hydroxyalkanoate units other than 3-hydroxybutyrate units in the poly(3-hydroxybutyrate) resin component is from 10 to 25 mol%.

4. The impact-cushioning particles according to claim 1, wherein
the poly(3-hydroxybutyrate) resin component has a melting point of 120 to 170°C.

5. The impact-cushioning particles according to claim 1, wherein
the other hydroxyalkanoate units are 3-hydroxyhexanoate units.

6. The impact-cushioning particles according to claim 1, comprising 10 to 70 parts by weight of a plasticizer per 100 parts by weight of the total poly(3-hydroxybutyrate) resin component.

7. The impact-cushioning particles according to claim 6, wherein
the plasticizer is a modified glycerin ester compound.

8. The impact-cushioning particles according to claim 7, wherein
the modified glycerin ester compound comprises at least one compound selected from the group consisting of glycerin diacetomonolaurate, glycerin diacetomonooleate, glycerin monoacetomonostearate, glycerin diacetomonocaprylate, and glycerin diacetomonodecanoate.

9. The impact-cushioning particles according to claim 8, wherein
the modified glycerin ester compound comprises glycerin diacetomonolaurate.

10. The impact-cushioning particles according to any one of claims 1 to 9, for use in artificial turf or a paved structure.

11. An artificial turf structure comprising artificial turf and the impact-cushioning particles according to any one of claims 1 to 9, wherein
gaps between piles of the artificial turf are filled with the impact-cushioning particles.

12. A paved structure comprising the impact-cushioning particles according to any one of claims 1 to 9, wherein
at least a part of the paved structure is filled with the impact-cushioning particles.
